# EUROPEAN PATENT SPECIFICATION

(11) **EP 1 817 871 B1**
(45) Date of publication and mention of the grant of the patent: **23.05.2012**
(21) Application number: 04797742.6
(22) Date of filing: 09.11.2004
(51) Int. Cl.: H04W 60/00

(54) **METHOD AND DEVICES FOR SUPPORTING A FLEXIBLE HANDLING OF CONNECTIONS TOWARDS A DUAL MODE MOBILE STATION**
VERFAHREN UND EINRICHTUNGEN ZUR UNTERSTÜTZUNG EINER FLEXIBLEN ABWICKLUNG VON VERBINDUNGEN IN RICHTUNG EINER DOPPELMODUS-MOBILSTATION
PROCEDE ET DISPOSITIFS SERVANT A SUPPORTER UNE GESTION SOUPLE DE CONNEXIONS EN DIRECTION D'UNE STATION MOBILE DOUBLE MODE

(43) Date of publication of application: 15.08.2007
(73) Proprietor: Telefonaktiebolaget LM Ericsson (publ), 164 83 Stockholm (SE)
(72) Inventor: WITZEL, Andreas, 52134 Herzogenrath (DE); EWERT, Joerg, Christian, 41812 Erkelenz (DE); STÜMPERT, Martin, 67691 Hochspeyer (DE); KELLER, Ralf, 52146 Würselen (DE)
(74) Representative: Tonscheidt, Andreas
(86) International application number: PCT/EP2004/012667
(87) International publication number: WO 2006/050739

(56) References cited:
- US-A1- 2003 043 992
- US-A1- 2004 005 886
- US-A1- 2004 087 307
- US-A1- 2004 105 434

## Description

### [technical field]

The present invention relates to a method, a mobile station and a node for handling a call involving a dual mode mobile station, i.e. a mobile station adapted to communicate via a first cellular access network and via a second access network.

### [related art]

Dual mode phones capable of communicating via GSM and CDMA or GSM and DECT networks are available for some time, already. However, dual mode phones supporting for example GSM and Bluetooth, or W-LAN, or other short range radio systems, fixed network access, infrared access or optical network access may already exist, but methods and devices for supporting call handling for both of the modes are not widespread, yet.

In recent years the percentage of household having a broadband connection at home was increasing. Today 11% of the households in Germany are equipped with a broadband connection (mainly ADSL). In Sweden the percentage is already 22% (50% ADSL, 50 % other technologies). It is expected that these percentages will increase significantly over the next years. Many of these users will install private WLAN(Wireless Local Area Network)-access points to connect their PCs (Personal Computers), PDA (Personal Digital Assistants), mobile phones etc. to their fixed broadband connection.

Furthermore, it is expected that the number of public WLAN-hot spots in Europe will increase from approx. 18.000 (2003) to 36.000 (2009).

Parallel, to the increased number of broadband connections the users are starting to use IP (Internet Protocol) telephony over their WLAN-broadband connection via PCs and PDAs. In the next years mobile phone vendors will launch so-called GSM/WLAN dual mode phones (e.g. Nokia 2005).

For these users of the GSM/WLAN dual mode phones it will be quite easy to originate calls via the SIP-client over the WLAN-radio interface towards other SIP- clients connected to the same network or even to the internet.

Today several architectures - such as the one disclosed in US 2004/0105434 A1 - are proposed how to integrate cellular networks with WLAN-access points. The main focus is the integration of the WLAN-access point towards the packet switching network.

For example Mobile @home proposes an architecture where the WLAN-access point is connected via a broadband connection to the BSC. The disadvantage of this solution is that the same operator has to apply the cellular mobile network and the broadband connection. Furmermore, Mobile @home proposes a solution based on the ADSL (Asymmetric Digital Subscriber Line) technology.

Therefore it is object of the invention to provide a method, a mobile station and a node that support a more flexible handling of connections towards a dual mode mobile station.

### [summary]

This will be solved advantageously by the method of claim 1, the mobile station of claim 3, and the node of claim 4. Further advantageous embodiments can be derived from the dependent claims.

The invention introduces a method for connecting a mobile station with a cellular telecommunications network, wherein the cellular telecommunications network comprises a core network and a first cellular access network. The core network is connected to a second access network via at least one node operating according to a session initiation protocol. The method comprises the following steps performed by the at least one node operating according to the session initiation protocol: Receiving a request for registering the mobile station at the at least one node, Registering the mobile station at the at least one node, Receiving a request for registering the mobile station with the cellular telecommunications network, wherein the request is sent in at least one session initiation part message comprising a message according to a protocol used between the first cellular access network and the core network, Unpacking the message, and Forwarding the message to a control node of the cellular telecommunications network.

The invention further provides a mobile station for communicating via a cellular telecommunications network comprising a core network and a first cellular access network. The mobile station comprises a first part operating according to at least one protocol used between a mobile station and a core network of a cellular telecommunications network, a second part operating according to a session initiation protocol, and a connecting unit operating according to one of a short range radio protocol, a fixed network protocol, an optical network protocol, or an infrared connection protocol. The mobile station further comprises: means for generating and sending requests for registering with the cellular telecommunications network to a node operating according to a session initiation protocol, wherein the request is sent in at least one session initiation part message comprising a message compliant to a protocol used between the first cellular access network and the core network of the cellular telecommunications network, and means for receiving messages according to the session initiation protocol, wherein a message according to a protocol used between the first cellular access network and the core network of the cellular telecommunications network is included.

The invention further provides a node for connecting a core network of a cellular telecommunications network to an access network. The cellular telecommunications network comprises a core network and a first cellular access network. The access network operates according to a session initiation protocol. The node acts towards the core network like a cellular access network node and towards the access network like a session initiation protocol proximity server. The node comprises means for receiving a request for registering the mobile station with the cellular telecommunications network, wherein the request is sent in at least one session initiation part message comprising a message according to a protocol used between the first cellular access network and the core network, an unpacking unit for unpacking the message, and a packing unit for including a message according to a protocol used between the first cellular access network and the core network of a cellular telecommunications network into at least one message according to the session initiation protocol.

In an embodiment of the invention, the first access network is one of a wireless local are network, a bluetooth network, a short range radio network, a fixed network, or an optical network.

It is a basic concept of the invention that the master call control, i.e. the control of all calls that are received via a network that is not connected to the second access network, is handled in the core network of the cellular telecommunications network. Furthermore the location management of the mobile station is handled in the cellular network as well. Location management and call control in the second access network is done either on behalf of the cellular telecommunications network or for calls that are received from a further party in the second access network.

### [brief description of the drawings]

The following figures show:
- Fig. 1: depicts an architecture for enabling a mobile station to access a telecommunications network via a further access network,
- Fig. 1a: depicts a registration of a dual mode mobile station with a SIP proxy, and with the cellular telecommunications network,
- Fig. 2: depicts the set-up of a connection to a mobile station according to the invention,
- Fig. 3: depicts a SIP call according to the invention,
- Fig. 4: depicts a mobile station according to the invention,
- Fig. 5: depicts a node according to the invention, and
- Fig. 6: depicts a method according to the invention.

### [detailed description]

In the following the invention will be further described by means of examples and by means of figures.

It should be noted that the WLAN access is just an exemplary embodiment and could be replaced by any other access technology as for example Bluetooth, optical connection, short range radio or fixed line connection. In particular access technology with lower costs on or a higher value of transmission resources like bandwidth than the cellular telecommunications access network can be used advantageously for the second access network. The cellular telecommunications network may be operating according to any standard of for example PDC (Personal Digital Cellular), AMPS (Advanced Mobile Phone Service), D-AMPS (Digital Advanced Mobile Phone Service), WCDMA (Wideband Code Division Multiple Access) or CDMA (Code Division Multiple Access).

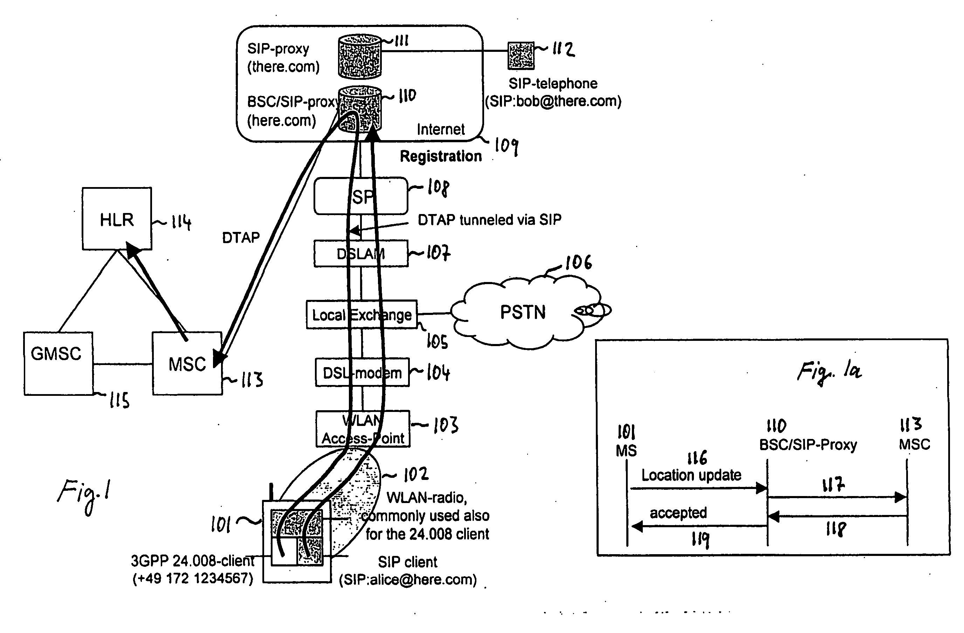

Figure 1 depicts an architecture for enabling a mobile station 101 to access a telecommunications network 113, 114, 115, 110 via the second access network 102, 103, 104, 105, 107, 108, 109, 110. The telecommunications network comprises a home location register 114, a gateway mobile services switching centre 115, a mobile services switching centre113 and a combined base station controller/session initiation protocol proxy 110 (*proximity* server), which are connected to each other. The combined base station controller/ SIP proxy 110 may also be regarded as external to the cellular telecommunications network, which depends just on the point of view and does not influence the invented solution. The combined base station controller/ SIP proxy does not have to support full base station controller functionality, but performs the actions of a base station controller at least to the extent that it is able to support the interface used between an mobile services switching centre and a base station controller. As the invention is not limited to GSM, the combined base station controller/ SIP proxy may be a combination of the respective access network node and a SIP proxy, that supports the interface used between the respective call control node and cellular telecommunications access network node. In an embodiment of the invention the base station controller and the SIP proxy are not combined in a single node but connected to each other.

The combined base station controller/SIP proxy 110 is located in an internet domain 109 comprising and a second SIP proxy 111 that is connected to telephone 112 adapted to send signals according to SIP.

The internet domain is connected via an ISP (Internet Service Provider) 108 and a DSLAM (Digital Subscriber Line Access Multiplexer) 107 to a local exchange 105 which is connected to a public switched telephony network 106.

The local exchange is further connected via a DSL (Digital Subscriber Line) modem 104 to a WLAN-access Point 103. The mobile station 101 is connected via a WLAN radio connection 102 to the WLAN Access Point 103. The mobile station comprises a first part operating according to protocols compliant to GSM standards, a second part operating according to a session initiation protocol, and a connecting unit operating according to W-LAN protocol.

According to the invention, the mobile station 101 uses the WLAN radio connection 102 to register in the first SIP proxy 110. To that end the mobile station 101 may send a SIP register message towards the SIP proxy 110 via the WLAN radio connection. After successful registration the SIP proxy can return a 200 OK message to the mobile station.

The mobile station registers with the cellular telecommunications network as depicted in figure 1a by sending a message in a first step 116 via the second access network to the base station controller/SIP proxy 110. The message is compliant to a protocol used between the mobile station and a control node of the cellular telecommunications network, for example a DTAP (Direct Transfer Application Part) location update message. The message is sent within at least one SIP message.

In a next step 117 the base station controller/SIP proxy 110 receives the message, unpacks it from the at least one SIP message and forwards it to call control node, the mobile services switching centre 113 via a standard interface between base station controller and mobile services switching centre. The mobile services switching centre 113 receives the message, updates entries in a database for storing subscriber data like the home location register 114 and a visitor location register (not depicted) and returns an acknowledgement message in a succeeding step 118. The base station controller/SIP proxy 110 receives the message over the interface, packs it into at least one SIP message and sends it towards the mobile station 101 via the second access network in a step 119. The messages sent between the base station controller/SIP proxy 110 and the mobile station do not necessarily have to comply to SIP but may be sent according to any other protocol used with the second access network for transmitting messages.

Figure 1 does not depict a connection towards the mobile station via a cellular telecommunications access network. This is due to the fact that according to the invention such connection is not used and may even be not available, for example because it has been deactivated in the mobile phone or due to lack of coverage or lack of capacity. Such lack of coverage may occur because no devices have been installed, inside buildings or tunnels, or at points of temporary high demand like at trade fairs, sports stadiums and alike.

In an embodiment of the invention the base station controller/SIP proxy 110 determines the mobile services switching centre by means of a table, wherein mobile services switching centre are assigned to location information of the mobile station. Such location information may be for example an identity of a W-LAN access point, a location area identity or geographical co-ordinates. The contents of the tale may be configured by means of a management interface. However, there may also be a fixed relation between the second access network and the mobile services switching centre.

It is the basic idea of the invention that the base station controller/SIP proxy 110 acts towards the cellular telecommunications network like a node of such network and towards the second access network like a node supporting protocols used in the second access network. The base station controller/SIP proxy 110 tunnels messages received from the cellular telecommunications network through the second access network, for example messages according to 3GPP standard 24.008 version 6.6.0 of September 2004.

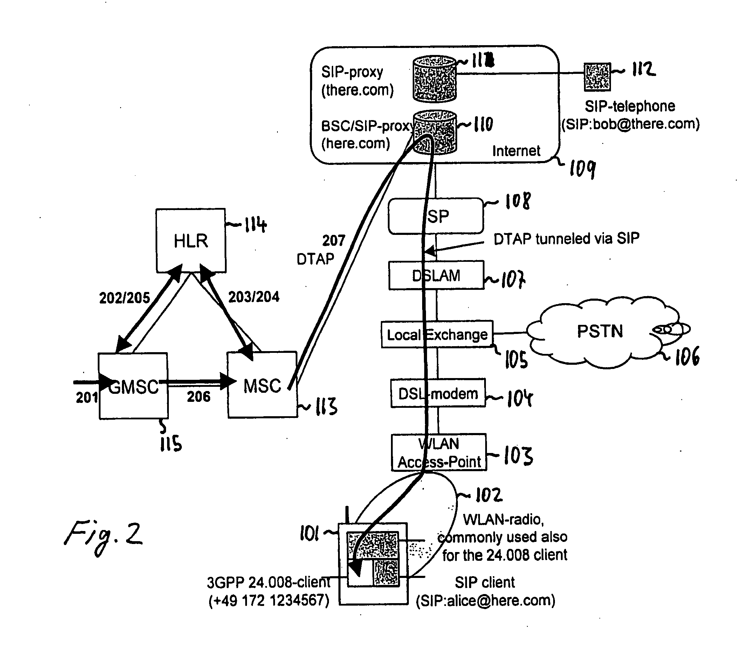

Figure 2 depicts a connection set-up according to the invention. Figure 2 depicts the architecture as described for figure 1. In a first step 201 the gateway mobile services switching centre 115 receives a call request. It interrogates the home location register 114 for routing information in a step 202. The home location register receives the request looks up which mobile services switching centre is currently serving the mobile station 101 and requests a MSRN (Mobile Station Roaming Number) from the mobile services switching centre 113 in a step 203. The mobile services switching centre checks with its visitor location register (not depicted) that the mobile station is currently located with the service area of the mobile services switching centre and returns a MSRN in a step 204. The home location register forwards the MSRN together with an address of the mobile services switching centre in a step 205. The steps 201 to 205 are state of the art and reflect in a simplified way the usual procedure for setting-up a call towards a subscriber served by an access network of the cellular telecommunications network.

For the invented solution, the mobile services switching centre does not necessarily have the information that the mobile station is served by the second access network. It may as well operate exactly as if the mobile station was served by a node of the cellular telecommunications access network. In a preferred embodiment of the invention, the mobile services switching centre stores an indication that the mobile station is served by the second access network. Said indication can be for example an indication that the location area of the mobile station is associated with, belongs to, or identifies the second access network, an identity of the base station controller associated with the information that it co-operates with or belongs to the second access network.

The mobile services switching centre 113 receives a call request message from the gateway mobile services switching centre 115 in a step 206. It performs usual call set-up towards the base station controller serving the location area that is stored for the mobile station for example in a visitor location register (not depicted). In this case that is the base station controller/SIP proxy 110. The base station controller/SIP proxy 110 acts like a base station controller towards the mobile services switching centre at least to the extent that it receives call set-up related DTAP messages compliant to 3GPP 24.008 and relays them piggybacked on SIP messages via W-LAN access to the mobile station and vice versa receives call set-up messages from the mobile station by means of SIP messages, unpacks the call set-up messages from said SIP messages and relays them to the mobile services switching centre. For the invented solution it is not relevant whether the call set-up messages are transported as SIP messages or as messages according to any other protocol used with the second access network.

The call set-up messages are terminated, processed and a response is produced if appropriate in the circuit switched client of the mobile station 101.

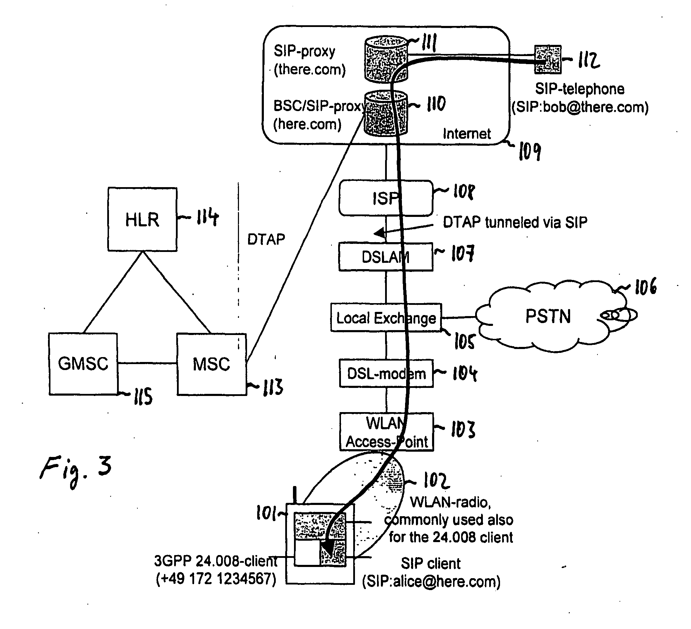

Figure 3 depicts a SIP call according to the invention in the architecture as described for figure 1. It should be noted that the architecture of figure 1 is just one possible embodiment of an architecture supporting the invented solution. The call has been set-up from the telephone operating according to a session initiation protocol 112 via the second SIP proxy 111, the DSLAM 107, the local exchange 105, the DSL modem 104, the WLAN-access Point 103 and the WLAN radio connection 102 to the mobile station 101. More precisely it is set-up via a WLAN radio module providing radio access facilities of the mobile station to a SIP client that is adapted to run IP Multimedia Subsystem protocols, as defined by 3GPP, of the mobile station. The depicted call has been set-up independent from the call control of the cellular telecommunications network and is thus one of the exceptions to the master call control principle as described above.

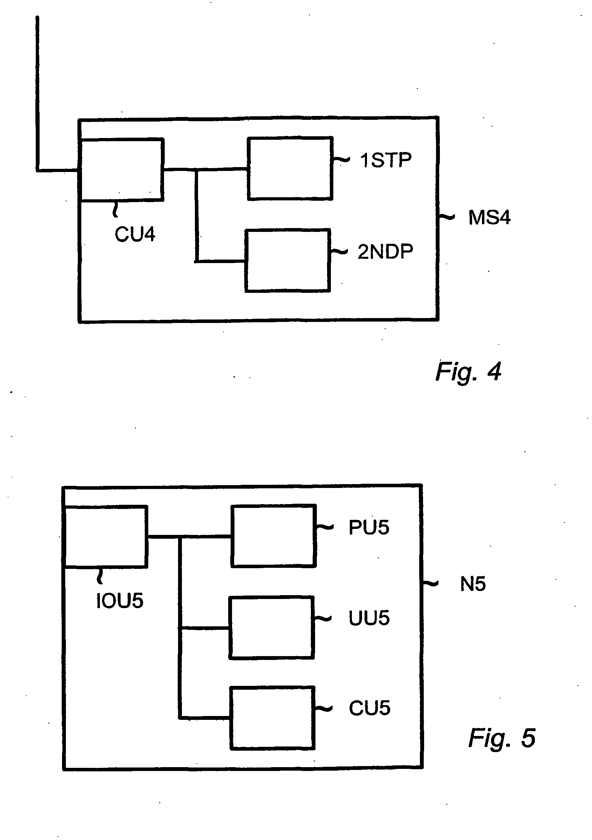

Figure 4 depicts a mobile station MS4 according to the invention. The mobile station comprises a first part 1STP operating according to at least one protocol used between a mobile station and a core network of a cellular telecommunications network, a second part operating 2NDP according to a session initiation protocol, and a connecting unit CU4 operating according to one of a short range radio protocol, a fixed network protocol, an optical network protocol, or an infrared connection protocol. The first part 1STP can be for example a circuit switched client according to cellular network specifications, e.g. compliant to PDC, AMPS, D-AMPS, WCDMA, or CDMA. The second part can be for example be a SIP client adapted to run IP Multimedia Subsystem related protocols as for example defined by 3GPP. The connecting unit can be implemented for example by a WLAN radio module, a bluetooth transceiver, a short range radio unit, each of them providing radio access facilities; an optical input output unit as for example an infrared interface, or a fixed network input output unit. The units and parts can be implemented by means of software, hardware or a combination of both.

Figure 5 depicts a node according to the invention. The node is adapted to act towards a core network of a cellular telecommunications network like a cellular access network node and towards the second access network like a session initiation protocol proximity server. In an embodiment of the invention the node N5 comprises an input output unit IOU5, for sending and receiving messages, an unpacking unit UU5 for unpacking a message according to a protocol used between an access network and a core network of a cellular telecommunications network, from at least one message according to the session initiation protocol and a packing unit PU5 for including a message according to a protocol used between an access network and a core network of a cellular telecommunications network into at least one message according to the session initiation protocol. It further comprises a control unit for controlling the other units and for operating towards a control node of a cellular telecommunications network like node of an associated cellular telecommunications access network node and towards the second access network like a SIP proxy. The node does not have to support full base station controller functionality, but performs the actions of a base station controller at least to the extent that it is able to support the interface used between an mobile services switching centre and a base station controller. As the invention is not limited to GSM, the node may be a combination of an respective cellular telecommunications access network (UTRAN, GERAN, D-AMPS, AMPS, PDC, CDMA) node and a SIP proxy, that supports the interface used between the respective call control node and cellular telecommunications access network node. The session initiation protocol may also be replaced or supplemented by any other protocol used for sending messages in the second access network. The units can be implemented by means of software, hardware or a combination of both.

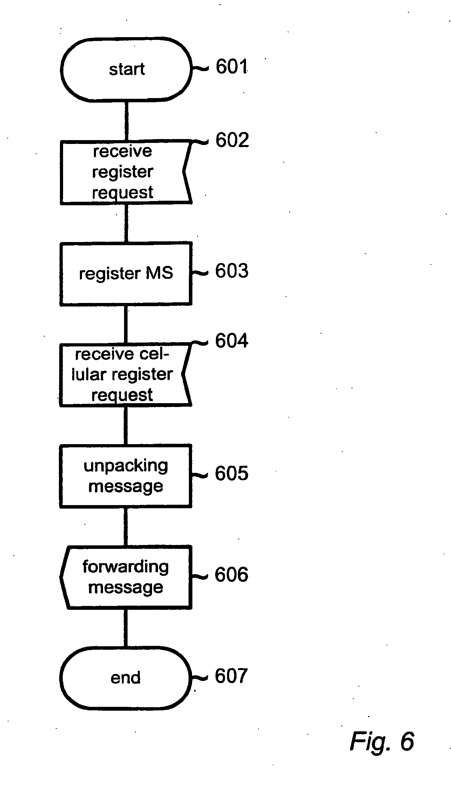

Figure 6 depicts a method according to the invention. The method is used for connecting a mobile station with a cellular telecommunications network via the second access network. The method comprises the following steps performed by a node operating according to the session initiation protocol, for example the base station controller/SIP proxy introduces in figure 1.

In a first step 601 the method is started. In a next step 602 the node receives a request for registering the mobile station at the at least one node, it registers the mobile station in a step 603, receives a request for registering the mobile station with the cellular telecommunications network in a step 604, wherein the request is sent in at least one session initiation part message comprising a message according to a protocol used between the first cellular access network and the core network. The node unpacks the message in a step 605, and forwards the message according to the protocol used between the first cellular access network and the core network to a control node of the cellular telecommunications network in a step 606.

The request for registering may be sent from the mobile station after the connection unit CU5, for example a WLAN radio unit, detects WLAN coverage. It will then request registration and if it is authorised will get it. The registration request may be according to the known SIP registration procedure.

## Claims

1. Method for connecting a mobile station (MS4) with a cellular telecommunications network, wherein the cellular telecommunications network comprises a core network and a first cellular access network, wherein the core network is connected to a second access network via at least one node operating according to a session initiation protocol, said method comprising the following steps performed by the at least one node operating according to the session initiation protocol:
• Receiving (602) a request for registering the mobile station at the at least one node,
• Registering (603) the mobile station at the at least one node,
• Receiving (604) a request for registering the mobile station with the cellular telecommunications network, wherein the request is sent in at least one session initiation part message comprising a message according to a protocol used between the first cellular access network and the core networks,
• Unpacking (605) the message and
• Forwarding (606) the message to a control node of the cellular telecommunications network.

2. Method according to claim 1 with the additional step of determining a control node as receiver of the unpacked message.

3. Mobile station (MS4) for communicating via a cellular telecommunications network comprising a core network and a first cellular access network the mobile station comprising a first part (1STP) operating according to at least one protocol used between a mobile station and a core network of a cellular telecommunications network, a second part (2NDP) operating according to a session initiation protocol, and a connecting unit (CU4) operating according to one of a short range radio protocol, a fixed network protocol, an optical network protocol, or an infrared connection protocol, the mobile station further comprising
• means for generating and sending requests for registering with the cellular telecommunications network to a node operating according to a session initiation protocol wherein the request is sent in at least one session, initiation part message comprising a message compliant to a protocol used between the first cellular access network and the core network of the cellular telecommunications network, and
• means for receiving messages according to the session initiation protocol, wherein a message according to a protocol used between the first cellular access network and the core network of the cellular telecommunications network is included.

4. Node (N5, 110) for connecting a core network of a cellular telecommunications network to an access network the cellular telecommunication comprising a core network and a first cellular access network, wherein the access network operates according to a session initiation protocol, **characterised by** that the node acts towards the core network like a cellular access network node and towards the access network like a session initiation protocol proximity server, further **characterized by** that the node comprises
• means for receiving (IOU5) a request for registering the mobile station with the cellular telecommunications network, wherein the request is sent in at least one session initiation part message comprising a message according to a protocol used between the first cellular access network and the core network,
• an unpacking unit (UU5) for unpacking the message and
• a packing unit (PU5) for including a message according to a protocol used between the first cellular access network and the core network of a cellular telecommunications network into at least one message according to the session initiation protocol.

## Patentansprüche

1. Verfahren zur Verbindung einer Mobilstation (MS4) mit einem zellularen Telekommunikationsnetz, wobei das zellulare Telekommunikationsnetz ein Kernnetz und ein erstes zellulares Zugangsnetz umfasst, wobei das Kernnetz über mindestens einen Knoten, der gemäß einem Sitzungseinleitungsprotokoll funktioniert, mit einem zweiten Zugangsnetz verbunden ist, und das Verfahren die folgenden Schritte umfasst, die durch den mindestens einen Knoten ausgeführt werden, der gemäß dem Sitzungseinleitungsprotokoll funktioniert:
• Empfangen (602) einer Anforderung zur Registrierung der Mobilstation an dem mindestens einen Knoten,
• Registrieren (603) der Mobilstation an dem mindestens einen Knoten,
• Empfangen (604) einer Anforderung zur Registrierung der Mobilstation beim zellularen Telekommunikationsnetz, wobei die Anforderung in mindestens einer Sitzungseinleitungsteilnachricht gesendet wird, die eine Nachricht gemäß einem Protokoll umfasst, das zwischen dem ersten zellularen Zugangsnetz und dem Kernnetz verwendet wird,
• Entpacken (605) der Nachricht, und
• Weiterleiten (606) der Nachricht an einen Steuerknoten des zellularen Telekommunikationsnetzes.

2. Verfahren nach Anspruch 1 mit dem zusätzlichen Schritt des Bestimmens eines Steuerknotens als Empfänger der entpackten Nachricht.

3. Mobilstation (MS4) zum Kommunizieren über ein zellulares Telekommunikationsnetz, das ein Kernnetz und ein erstes zellulares Zugangsnetz umfasst, wobei die Mobilstation einen ersten Teil (1STP), der gemäß mindestens einem Protokoll funktioniert, das zwischen einer Mobilstation und einem Kernnetz eines Telekommunikationsnetzes verwendet wird, einen zweiten Teil (2NDP), der gemäß einem Sitzungseinleitungsprotokoll funktioniert, und eine Verbindungseinheit (CU4) umfasst, die gemäß einem von einem Nahbereichsfunkprotokoll, einem Festnetzprotokoll, einem optischen Netzprotokoll oder einem Infrarotverbindungsprotokoll funktioniert, wobei die Mobilstation ferner umfasst:
• Mittel zum Erzeugen und Senden von Anforderungen zum Registrieren beim zellularen Telekommunikationsnetz an einen Knoten, der gemäß einem Sitzungseinleitungsprotokoll funktioniert, wobei die Anforderung in mindestens einer Sitzungseinleitungsteilnachricht gesendet wird, die eine Nachricht umfasst, die einem Protokoll entspricht, das zwischen dem ersten zellularen Zugangsnetz und dem Kernnetz des zellularen Telekommunikationsnetzes verwendet wird, und
• Mittel zum Empfangen von Nachrichten gemäß dem Sitzungseinleitungsprotokoll, wobei eine Nachricht gemäß einem Protokoll enthalten ist, das zwischen dem ersten zellularen Zugangsnetz und dem Kernnetz des zellularen Telekommunikationsnetzes verwendet wird.

4. Knoten (N5, 110) zum Verbinden eines Kernnetzes eines zellularen Telekommunikationsnetzes mit einem Zugangsnetz, wobei das zellulare Telekommunikationsnetz ein Kernnetz und ein erstes zellulares Zugangsnetz umfasst, wobei das Zugangsnetz gemäß einem Sitzungseinleitungsprotokoll funktioniert, **dadurch gekennzeichnet, dass** der Knoten in Richtung des Kernnetzes wie ein zellularer Zugangsnetzknoten agiert und in Richtung des Zugangsnetzes wie ein Sitzungseinleitungsprotokoll-Proximity-Server agiert, ferner **dadurch gekennzeichnet, dass** der Knoten umfasst:
• Mittel zum Empfangen (IOU5) einer Anforderung zur Registrierung der Mobilstation beim zellularen Telekommunikationsnetz, wobei die Anforderung in mindestens einer Sitzungseinleitungsteilnachricht gesendet wird, die eine Nachricht gemäß einem Protokoll umfasst, das zwischen dem ersten zellularen Zugangsnetz und dem Kernnetz verwendet wird,
• eine Entpackungseinheit (UU5) zum Entpacken der Nachricht, und
• eine Packungseinheit (PU5) zum Aufnehmen einer Nachricht gemäß einem Protokoll, das zwischen dem ersten zellularen Zugangsnetz und dem Kernnetz eines zellularen Telekommunikationsnetzes verwendet wird, in mindestens eine Nachricht gemäß dem Sitzungseinleitungsprotokoll.

## Revendications

1. Procédé de connexion d'une station mobile (MS4) avec un réseau de télécommunication cellulaire, dans lequel le réseau de télécommunication cellulaire comprend un réseau central et un premier réseau d'accès cellulaire, dans lequel le noeud central est connecté à un second réseau d'accès via au moins un noeud fonctionnant selon un protocole d'amorce de session, ledit procédé comprenant les étapes suivantes effectuées par au moins un noeud fonctionnant selon le protocole d'amorce de session :
• recevoir (602) une demande d'enregistrement de la station mobile au niveau d'au moins un noeud,
• enregistrer (603) la station mobile au niveau d'au moins un noeud,
• recevoir (604) une demande d'enregistrement de la station mobile dans le réseau de télécommunication cellulaire, dans lequel la demande est envoyée dans au moins un message de sous-système d'amorce de session comprenant un message selon un protocole utilisé entre le premier réseau d'accès cellulaire et le réseau central,
• sortir du paquet (605) le message et
• acheminer (606) le message vers un noeud de commande du réseau de télécommunication cellulaire.

2. Procédé selon la revendication 1 comportant l'étape additionnelle consistant à déterminer un noeud de commande comme récepteur du message sorti du paquet.

3. Station mobile (MS4) pour communiquer via un réseau de télécommunication cellulaire comprenant un réseau central et un premier réseau d'accès cellulaire, la station mobile comprenant un premier sous-système (1STP) fonctionnant selon au moins un protocole utilisé entre une station mobile et un réseau central d'un réseau de télécommunication cellulaire, un second sous-système (2NDP) fonctionnant selon un protocole d'amorce de session et une unité de connexion (CU4) fonctionnant selon un d'un protocole radio à courte portée, un protocole de réseau fixe, un protocole de réseau optique ou un protocole de connexion infrarouge, la station mobile comprenant en outre :
• un moyen pour générer et envoyer des demandes d'enregistrement dans le réseau de télécommunication cellulaire vers un noeud fonctionnant selon un protocole d'amorce de session, dans lequel la demande est envoyée dans au moins un message de sous-système d'amorce de session comprenant un message conforme à un protocole utilisé entre le premier réseau d'accès cellulaire et le réseau central du réseau de télécommunications cellulaire, et
• un moyen pour recevoir des messages selon le protocole d'amorce de session, dans lequel un message selon un protocole utilisé entre le premier réseau d'accès cellulaire et le réseau central du réseau de communication cellulaire est inclus.

4. Noeud (N5,110) pour connecter un réseau central d'un réseau de télécommunication cellulaire à un réseau d'accès, la télécommunication cellulaire comprenant un réseau central et un premier réseau d'accés cellulaire, dans lequel le réseau d'accès fonctionne selon un protocole d'amorce de session, **caractérisé en ce que** le noeud agit par rapport au réseau central comme un noeud de réseau d'accès cellulaire et par rapport au réseau d'accès comme un serveur de proximité de protocole d'amorce de session, **caractérisé en ce que** le noeud comprend
• un moyen pour recevoir (IOU5) une demande d'enregistrement de la station mobile dans le réseau de télécommunication cellulaire, dans lequel la demande est envoyée dans au moins un message de sous-système d'amorce de session comprenant un message selon un protocole utilisé entre le premier réseau d'accès cellulaire et le réseau central,
• une unité de dépaquetage (UU5) pour sortir du paquet le message, et
• une unité de mise en paquet (PU5) pour inclure un message selon un protocole utilisé entre le premier réseau d'accès cellulaire et le réseau central d'un réseau de télécommunications cellulaire dans au moins un message selon le protocole d'amorce de session.
